# EUROPEAN PATENT APPLICATION

(11) **EP 2 555 077 A2**
(43) Date of publication of application: **06.02.2013**
(21) Application number: 12176692.7
(22) Date of filing: 17.07.2012
(51) Int. Cl.: G05F 1/67

(54) **Solar power generation system**

(30) Priority: 03.08.2011 JP 2011170246
(71) Applicant: Kabushiki Kaisha Toshiba, Tokyo 105-8001 (JP)
(72) Inventor: Kawamoto, Shinya, Tokyo, 105-8001 (JP); Endo, Tamotsu, Tokyo, 105-8001 (JP)
(74) Representative: HOFFMANN EITLE

(57) **Abstract**

A system includes a solar power generator having plural arrays and a power storage device having plural secondary batteries. The solar power generator and the power storage device are respectively provided with DC/DC converters coupled together, and each DC/DC converter is coupled with an AC/DC converter to configure a power generating/storing unit. Such units are coupled to an electricity distribution system through respective AC/DC converter. The solar power generator of each unit is provided with a control unit performing maximum power point tracking control so as to obtain the maximum output characteristic of the solar power generator. The power storage device is provided with a control unit detecting a voltage at the battery side and controlling charging/discharging thereof. Moreover, an integrated control device coupled with respective control units and controlling charging/discharging and an output is provided.

## Description

### CROSS-REFERENCE TO RELATED APPLICATIONS

This application is based upon and claims the benefit of priority from Japanese Patent Application NO. 2011-170246, filed on August 3, 2011; the entire contents of which are incorporated herein by reference.

### FIELD

Embodiments described herein relate generally to a solar power generation system including a solar power generator and a power storage device.

### BACKGROUND

In a large-scale solar power generation system so-called the "mega-solar" system, there is a case that an output fluctuation thereof is suppressed by batteries. For this purpose, with respect to each solar power generator and each battery, AC/DC converter having corresponding output capacity is prepared, and the solar power generator and the battery are coupled by AC.

In the solar power generation system, a technology called MPPT (Maximum Power Point Tracking) is generally employed. That is, the solar power generator is controlled to track the optimized operating point between a voltage and a current so that the output power by a solar cell becomes always maximum relative to a change in the power characteristic due to a change in solar irradiation, etc. According to the MPPT technology, a peak of the power-generation characteristic is calculated from current and voltage values obtained by a sensor and finely controls the operating point of the power generator in a direction in which the inclination of the power becomes zero at the peak of the power-generation characteristic.

The MPPT control is performed on the whole array of the solar power generator. Therefore, the power-generation characteristic may have plural peaks when the generated power by some arrays decrease due to dusts, pollution, and shading, etc. Accordingly, it becomes difficult to correctly specify the peak of the power-generation characteristic that is the reference operating point, resulting in the power loss by the whole system.

Moreover, all batteries are coupled to one converter. Accordingly, only one kind of batteries is available and batteries with different characteristics cannot be coupled together. Hence, it is difficult to optimize the battery characteristic depending on the output characteristic of the power generator, and the usage of the power.

As explained above, a solar power generator and a set of battery devices are coupled together using an AC/DC converter provided in each device. Therefore, a complicated control is needed which suppresses an output fluctuation in an AC system while harmonizing the generated power level with the discharging level of the batteries.

Therefore, it has been requested to provide a solar power generation system that is capable of keeping the power-generation characteristic of the whole system in an optimized condition even if the power-generation characteristic by some arrays decrease due to shading, etc.

### BRIEF DESCRIPTION OF THE DRAWINGS

FIG. 1 is a wiring diagram showing the outline of a first embodiment;
FIG. 2 is a wiring diagram showing the detail of each component of the first embodiment;
FIG. 3 is a graph showing an operation of a solar power generator under an MPPT control;
FIG. 4 is a graph showing an illustrative method of calculating a target output value by the solar power generator;
FIG. 5 is a wiring diagram showing a second embodiment;
FIG. 6 is a wiring diagram showing a third embodiment;
FIG. 7 is a wiring diagram showing a fourth embodiment;
FIG. 8 is a wiring diagram showing a fifth embodiment; and
FIG. 9 is a wiring diagram showing a sixth embodiment.

### DETAILED DESCRIPTION

According to one embodiment, a solar power generation system employs the following configuration.
(1) A solar power generator includes a plurality of arrays, and a power storage device includes a plurality of secondary batteries.
(2) The solar power generator and the power storage device are respectively provided with DC/DC converters which are coupled together, and each DC/DC converter is coupled with an AC/DC converter to configure a power generating/storing unit.
(3) A plurality of the above-explained units are prepared and coupled with an electricity distribution system through respective AC/DC converters.
(4) The solar power generator of each unit is provided with a control unit that performs maximum power point tracking control so as to obtain a maximum output characteristic of the solar power generator.
(5) The power storage device of each unit is provided with a control unit which detects a voltage of a DC system coupled with the solar power generator and which controls charging/discharging so that such a voltage becomes in a predetermined range.
(6) The solar power generation system further includes an integrated control device connected to respective control units of each unit via a communication link and which controls charging/discharging of each unit and an output thereof.
(7) The integrated control device calculates a target output value of a whole system based on an output value by the solar power generator of each unit, and transmitting the calculated target output value to the AC/DC converter of each unit.
(8) The AC/DC converter of each unit is provided with a control unit that controls the AC/DC converter to establish a system interconnection based on the target output value received from the integrated control device.

Hereinbelow, various embodiments will be explained with reference to the accompanying drawings.

### 1. First Embodiment

### (1) Configuration

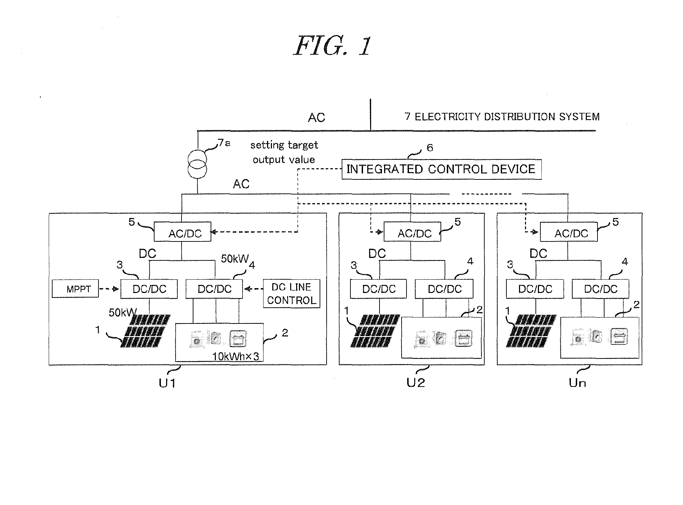

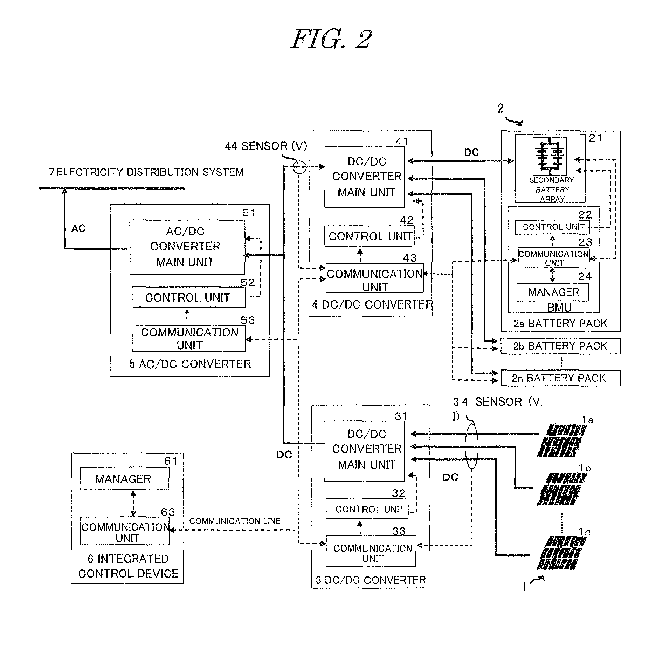

As shown in FIGS. 1 and 2, a solar power generation system of this embodiment includes a plurality of power generating/storing units (hereinafter, referred to as units) U1 to Un. Each of the units U1 to Un includes a solar power generator 1 having a plurality of arrays 1a to In and a power storage device 2 having a plurality of battery packs 2a to 2n.

The solar power generator 1 and the power storage device 2 both have respective DC/DC converters 3 and 4, and such DC/DC converters 3 and 4 are coupled with each other. The DC/DC converters 3 and 4 are coupled to an AC/DC converter 5 provided in the same unit.

The plurality of units U1 to Un are connected in a parallel manner by AC system wirings run from the outputs of respective AC/DC converters 5, and such wirings are coupled to an electricity distribution system 7 via a transformer 7a.

The DC/DC converters 3 and 4 of each of the units U1 to Un and the AC/DC converter 5 thereof are coupled to an integrated control device 6 provided outside each unit. That is, the DC/DC converters 3 and 4 and the AC/DC converter 5 of each of the units U1 to Un are provided with a control unit that controls the operation of the solar power generator 1 and that of the power storage device 2, and the control units of respective units are connected to the integrated control device 6 via respective communication units to exchange control information via a communication link, e.g. through a communication line.

Next, a detailed explanation will be given of each device of this embodiment with reference to FIG. 2.

The DC/DC converter 3 of the solar power generator 1 of each unit includes a converter main unit 31, and a control unit 32 that performs maximum power point tracking control so that the output characteristic of the solar power generator 1 becomes maximum. The control unit 32 includes a communication unit 33 for establishing a communication among the integrated control device 6, the DC/DC converter 4 and the AC/DC converter 5 at the power storage device side. Moreover, the DC/DC converter 3 has a sensor 34 that measures an output current and an output voltage by each of the arrays 1a to 1n.

Each of the battery packs 2a to 2n of the power storage device 2 of each unit includes a secondary battery array 21 having a plurality of batteries connected. Each of the battery packs 2a to 2n also includes a control unit 22 that controls charging/discharging of each battery configuring the secondary battery array 21, and a communication unit 23 that exchanges control information between the control unit 22 and the DC/DC converter 4. An output current and an output voltage by each battery configuring the secondary battery array 21 are input to the communication unit 23.

Each of the battery packs 2a to 2n has a manager 24. The manager 24 is coupled to the control unit 22 and the communication unit 23, and controls charging/discharging of each battery configuring the secondary battery array 21 and also charging/discharging of the whole battery pack based on a charging/discharging instruction from the DC/DC converter 4 and the charging/discharging condition of each battery. That is, the control unit 22, the communication unit 23 and the manager 24 configure a battery management unit (BMU) for each of the battery packs 2a to 2n.

The DC/DC converter 4 provided for the power storage device 2 of each unit includes a converter main unit 41 that converts an input/output voltage, and a control unit 42 that allows each of the battery packs 2a to 2n to perform charging/discharging. The control unit 42 includes a communication unit 43 that exchanges charging/discharging information of each of the battery packs 2a to 2n and control information among the integrated control device 6, the DC/DC converter 3 and the AC/DC converter 5.

Hence, the communication unit 43 is coupled to a sensor 44 that detects an input/output current and an input/output voltage of the DC/DC converter 4 and the communication unit 23 provided for the battery management unit of each of the battery packs 2a to 2n.

A control unit 52 of the AC/DC converter 5 of each unit controls an AC-DC bidirectional inverter 51 so as to establish a link among the systems and a target output value transmitted from the integrated control device 6.

The AC-DC bidirectional inverter 51 has an output value controlled by the control unit 52, and converts a DC voltage output by the DC/DC converter 4 at the solar-power-generator-3 side and the DC/DC converter 4 at the battery-pack-2 side into an AC voltage, and outputs such an AC voltage.

Moreover, the AC/DC converter 5 includes a communication unit 53 that exchanges charging/discharging information and control information among the integrated control device 6, the DC/DC converter 3 of the solar power generator, and the DC/DC converter 4 of the power storage device.

The integrated control device 6 includes a manager 61 and a communication unit 63. The manager 61 is coupled with the communication unit of the AC/DC converter 5 of each of the units U1 to Un through the communication unit 63, and controls charging/discharging of each of the units U1 to Un, an output thereof, and an output to each of the units U1 to Un and to the electricity distribution system 7.

Hence, the manager 61 further includes an calculation unit (unillustrated) that calculates a target value of an output to the electricity distribution system 7 from the whole system based on the output value by the solar power generator of each unit. The manager 61 transmits a target output value P calculated by the calculation unit to the AC/DC converter 5 of each of the units U1 to Un through the communication unit 63.

The integrated control device 6 monitors information on an output by the solar power generator 1 of each of the units U1 to Un, and information on charging/discharging of each power storage device 2, stores those pieces of information in the manager 61 and causes the manger 61 to display those pieces of information. Hence, the SOC (State Of Charge) of each battery configuring the secondary battery array of each of the battery packs 2a to 2n and the lifetime of each battery are managed.

The manager 61 determines the battery pack to be charged or discharged among the battery packs 2a to 2n based on information obtained from each of the units U1 to Un. The manager 61 further finds out the battery pack available to DC system stabilization. That is, the manager 61 chooses the battery packs 2a to 2n to be used in accordance with the rapidness of the DC voltage fluctuation received from the DC/DC converter 4 of each of the units U1 to Un.

### (2) Operations

### (a) Solar Power Generator

According to the solar power generator 1 of each of the units U1 to Un, power generated by the arrays 1a to 1n is output to the DC/DC converter 3 of the local unit.

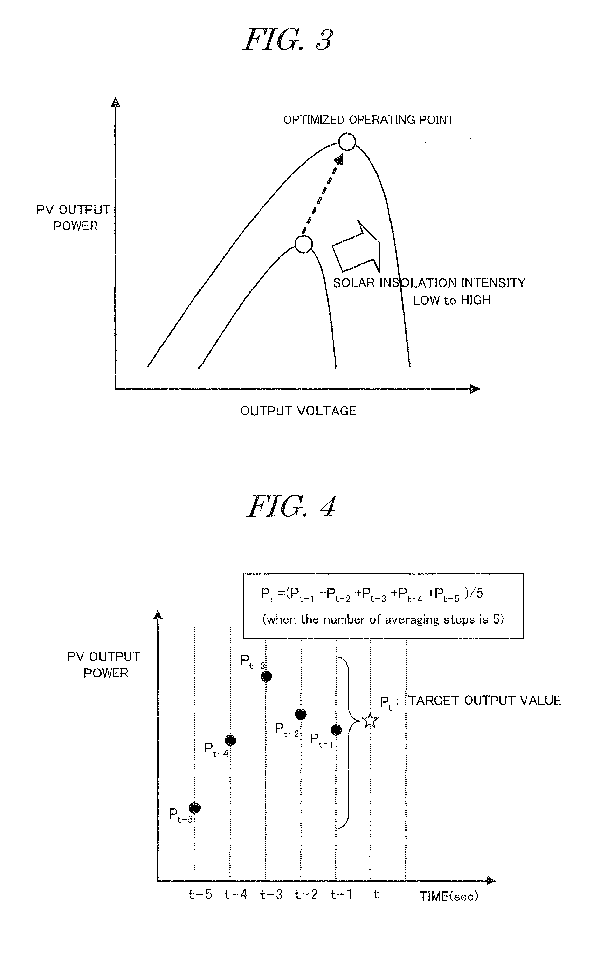

The DC/DC converter 3 of the solar power generator 1 performs MPPT (Maximum Power Point Tracking) control. The MPPT control is to track the maximum power point, and is a conventionally well-known technology. FIG. 3 is a graph showing the operating principle of the MPPT control. The vertical axis of this graph and the horizontal axis thereof indicate an output voltage by the solar power generator 1 and an output voltage by the DC/DC converter 3, respectively. As is indicated by this graph, the output voltage that is the optimized operating point differs between low and high intensity of the solar insolation. Hence, the control unit 32 of the DC/DC converter 3 controls the output voltage from the solar power generator 1 in accordance with the solar insolation intensity.

As described above, the control unit 32 of the DC/DC converter 3 controls the output voltage by the solar power generator 1 through the MPPT control. Thereafter, the converter main unit 31 of the DC/DC converter 3 converts thus obtained output voltage from the solar power generator 1 into a predetermined DC voltage based on an instruction from the control unit 32.

The DC/DC converter 3 of each of the units U1 to Un sends the output voltage value from the solar power generator 1 obtained by the sensor 34, etc., to the integrated control device 6 and the AC/DC converter 4 through the communication unit 33. Exchanging of data like the output voltage value may be directly carried out between respective units, or may be carried out through the integrated control device 6.

### (b) Power storage device

The power storage device 2 stores and stably supplies power generated by the solar power generator 1. The output from the solar power generator 1 is sent to each of the battery packs 2a to 2n of the power storage device 2 by the DC system through the DC/DC converter 3 of the solar power generator 1 and the DC/DC converter 4 of the power storage device 2.

The DC/DC converter 4 of the power storage device 2 detects a voltage of the DC system by the sensor 44, and controls charging/discharging of each of the battery packs 2a to 2n so that the voltage of the DC system coupled to the side of the AC/DC converter 5 falls within a constant range.

That is, the manager 24 of each of the battery packs 2a to 2n receives information on the SOC (Stage Of Charge) of each battery configuring the secondary battery array as well as information on the lifetime thereof from the integrated control device 6, and controls charging/discharging of individual secondary battery based on the received information. Hence, each of the battery packs 2a to 2n shows different charging/discharging characteristics depending on the property of the secondary battery configured, and the capacity thereof, etc.

Since each of the battery packs 2a to 2n has different charging/discharging characteristics, and thus the output voltage from each of the battery packs 2a to 2n also differs. Pieces of information on those output voltages are transmitted to the control unit 42 of the DC/DC converter 4 through the communication units 23 and 43. The control unit 42 converts the output voltage from each of the battery packs 2a to 2n based on information from each of the battery packs 2a to 2n and information obtained from the sensor 44 provided at the output side of the DC/DC converter 4, that is the output voltage value of the DC/DC converter 4, and thus controls the voltage of the DC system detected by the sensor 44 to fall within the constant range.

As described above, the DC voltage at the side of the battery pack differs for each pack, but according to this embodiment, the voltage of each of the battery packs 2a to 2n is not detected and utilized. That is, the DC wiring at a side coupled to the solar power generator 1 has a fixed range, and the DC/DC converter 4 of the power storage device 2 performs independently, for each pack, voltage conversion between the DC voltage different for each pack and the voltage at the side of the DC wiring.

As explained above, according to this embodiment, the DC wiring voltage fluctuates based on the ratio of the power generation by the solar power generator 1 and the electric energy converted into AC power by the AC/DC converter 5, but the DC/DC converter 4 of the power storage device 2 controls charging/disoharging among the battery packs 2a to 2n so that such fluctuation becomes in the regulated range.

In this case, charging/discharging of the secondary battery configuring each battery pack and the output voltage from each of the battery packs 2a to 2n to the AC/DC converter 5 can be controlled by the DC/DC converter 4 of each of the units U1 to Un independently for each unit.

### (c) AC/DC Converter

The DC/DC converter 4 of the power storage device 2 is coupled with the AC/DC converter 5 as explained above. Hence, the output by the DC/DC converter 4 is sent to the AC/DC converter 5 via the DC system, and is converted into AC power for system interconnection by the AC/DC converter 5. When the power storage device 2 discharges, the power from the DC/DC converter 3 of the solar power generator 1 is also sent to the AC/DC converter 5, and is converted into AC power by the AC/DC converter 5 for system interconnection.

The control unit 52 of the AC/DC converter 5 receives the target output value P instructed by the integrated control device 6, and controls the AC/DC converter main unit 51 for system interconnection in accordance with this instruction. In this case, each of the units U1 to Un are connected to the electricity distribution system 7 through the transformer 7a in a parallel connection manner, and thus each of the units U1 to Un independently performs system interconnection.

### (d) Integrated Control Device 6

The calculation unit provided in the manager 61 of the integrated control device 6 calculates the target output value P for a system using measured output data transmitted from the DC/DC converter 3 of the solar power generator 1. The target output value P is transmitted to the control unit 52 of the AC/DC converter 5 as explained above, and the AC/DC converter main unit 51 controlled by the control unit 52 converts the power of the DC system into AC power matching the specifications of the system to perform system interconnection.

Regarding how to calculate the target output value P, a moving average technique and a fluctuation range centering technique, etc., are well known. FIG. 4 is a graph showing the principle of the moving average technique. The vertical axis of this graph and the horizontal axis thereof indicate an output voltage by the solar power generator and a time , respectively. As shown in this graph, according to the moving average technique, an output by a solar power generator (PV) is measured at certain intervals (t₋₅ to t), and an average Pₜ of those measured values is calculated to obtain the target output value.

The integrated control device 6 is coupled with, through the communication unit 63, the solar power generator 1, the power storage device 2, and the DC/DC converters 3 and 4 of each of the units U1 to Un. The manager 61 of the integrated control device 6 obtains information on each device as explained above, controls charging/discharging, etc.

### (3) Advantages

This embodiment has the following advantages.
(a) The solar power generator 1 and the power storage device 2 are coupled in each of small units U1 to Un through the DC/DC converters 3 and 4, and the whole system is interconnected by AC. Accordingly, it is unnecessary to monitor and control the real-time status of the DC side, and the control for charging/discharging and system interconnection is facilitated in comparison with the conventional technology.
(b) Since the solar power generators 1 are distributed and disposed in the plurality of units U1 to Un, the optimization by MPPT can be carried out for each small unit against local dusts, pollution, and shading in comparison with the conventional technology. As a result, the reduction of the operation efficiency due to the shading, etc., can be suppressed as a local incident, and the effect of such a local incident to the efficiency of the whole system can be reduced.
(c) Various kinds of secondary batteries with different charging/discharging characteristics, costs, etc., are available as the power storage device 21 for each of the units U1 to Un, and the battery characteristic can be optimized.
(d) In each of the units U1 to Un, the solar power generator 1 and the power storage device 2 are coupled by a DC system. Accordingly, each of the DC/DC converters 3 and 4 can perform independent control, and it is unnecessary to provide the integrated control device for each unit U1 to Un to control such a unit, and a complex control through a communication line in each of the units U1 to Un is unnecessary.

### 2. Second Embodiment

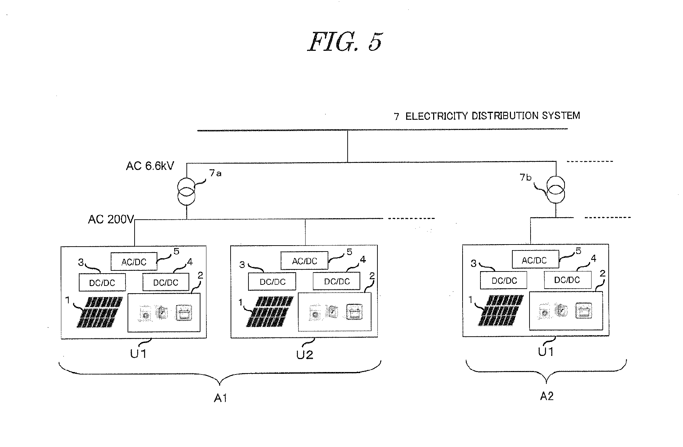

FIG. 5 shows a second embodiment. As shown in FIG. 5, according to the second embodiment, a plurality of solar power generation systems each having a plurality of units U1 to Un are coupled with an electricity distribution system 7 in a parallel connection manner. Respective solar power generation systems are installed in different areas, and are coupled with the electricity distribution system 7 through respective transformers 7a, 7b, ....

According to the second embodiment, also, each of the units U1 to Un completes individual control within each unit as is explained in the first embodiment. Accordingly, a complex control as a whole for the plurality of solar power generation systems is unnecessary. Therefore, the polarity of units U1 to Un are coupled with the AC system for each unit, and thus a large-scale solar power generation system is realized.

For example, as shown in Fig. 5, the units U1 to Un located at close areas are coupled by 200 V as area units A1 to An, and the area units A1 to An are coupled with each other by 6.6 kV through respective transformers 7a, 7b, etc. By this configuration, good electric power transmission efficiency can be obtained.

### 3. Third Embodiment

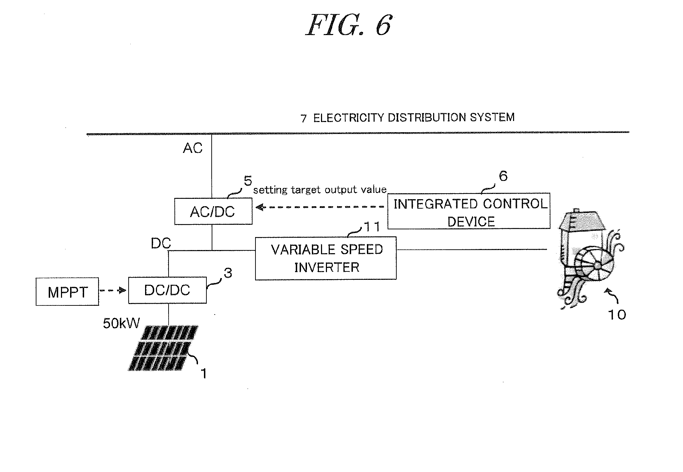

FIG. 6 shows a third embodiment. According to the third embodiment, a combination of a small pumped-storage power generator 10 and a variable speed inverter 11 is used as the power storage device. According to the third embodiment, like the case in which the secondary battery is used as the power storage device 2, the water pumping and the power generation can be controlled so as to stabilize the DC system.

That is, at the time of storing power, the power from the solar power generator 1 is supplied to the variable speed inverter 11 (corresponding to the DC/DC converter 3 of the first embodiment) through the DC system, and the small pumped-storage power generator 10 is driven as a pumped-storage device by the power converted by the variable speed inverter 11.

Conversely, at the time of discharging, the small pumped-storage power generator 10 generates power using the energy of the pumped water, and the generated power is output to the DC system by the variable speed inverter 11. The output DC power is output to the AC system so as to match the target output value P by the AC/DC converter 5 like the first embodiment.

According to the third embodiment, the power storage devices 2 of all units U1 to Un may be the combination of the small pumped-storage power generator 10 and the variable speed inverter 11, but any one of the units U1 to Un can use the small pumped-storage power generator 10 and the variable speed inverter 11.

According to the third embodiment, in comparison with the case in which the power storage devices 2 of all units U1 to Un are configured by respective secondary batteries, the system can be built inexpensively. Moreover, it is especially advantageous for an environment where water reserved in a conventional tank is available and a small pumped-storage power generator can be built.

### 4. Fourth Embodiment

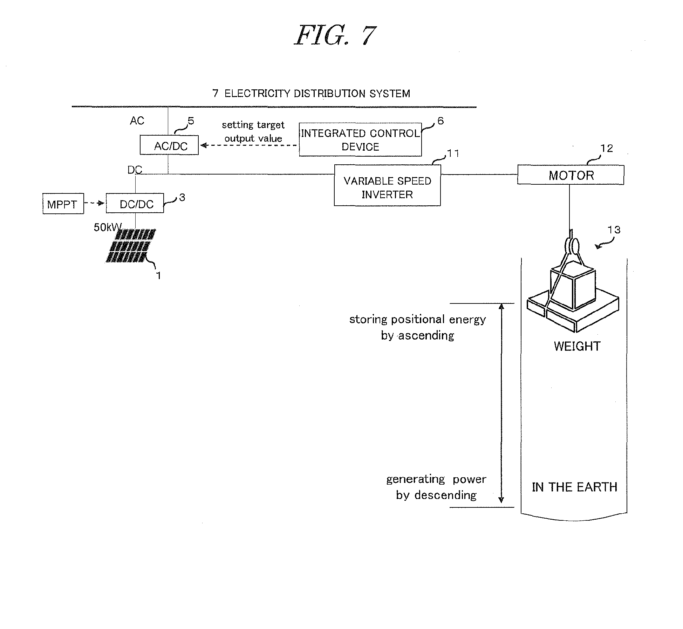

FIG. 7 shows a fourth embodiment. According to the fourth embodiment, the positional energy of a weight 13 is utilized by a combination of a motor 12 and the variable speed inverter 11 to generate power.

That is, for example, a vertical shaft is dug deep in the earth, and the weight 13 ascending/descending by the motor 12 is disposed in the shaft. The weight 13 is pulled up to the top of the vertical shaft by the motor 12 driven by the power from the solar power generator 1 at the time of storing energy. Conversely, at the time of discharging, the weight 13 is descended toward the bottom of the vertical shaft by gravitational force, and the motor 12 is driven as a power generator utilizing the positional energy of the weight 13.

As explained above, according to the fourth embodiment, the positional energy of the weight is utilized as the power storage device 2. This enables the system to store power effectively utilizing a space like the vertical shaft provided in the earth.

According to the fourth embodiment, all power storage devices 2 of the units U1 to Un may be the combination of the motor 12 and the weight 13, but any of the units U1 to Un may utilize the motor 12 and the weight 13.

### 5. Fifth Embodiment

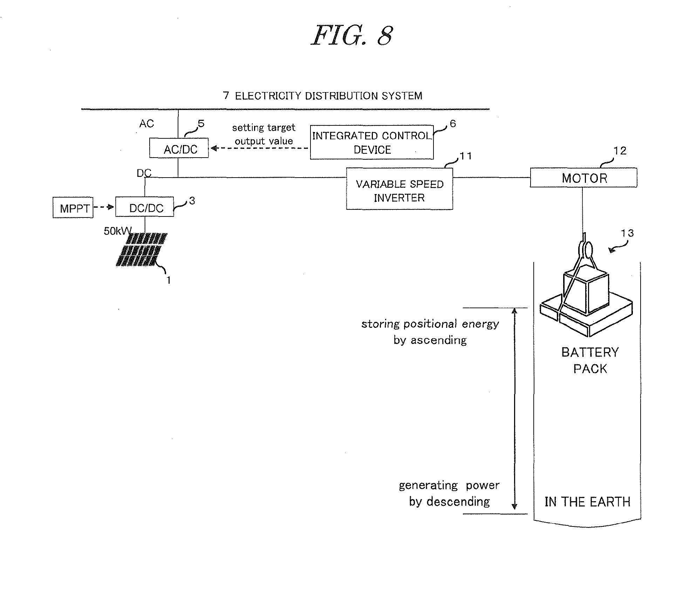

FIG. 8 shows a fifth embodiment. According to the fifth embodiment, the power storage device 2 uses the secondary battery, though, the secondary battery itself is the weight 13.

According to the fifth embodiment, the stored energy by the secondary battery and the positional energy by the weight 13 can be utilized simultaneously. As a result, it is possible to not only efficiently utilize a space in the earth but also suppress the reduction of the lifetime of the secondary battery since the secondary battery is disposed in the earth where a temperature change is little, thereby maintaining a temperature around the secondary battery at constant.

According to the fifth embodiment, only some of the units U1 to Un can employ the structure of utilizing the secondary battery as the weight.

### 6. Sixth Embodiment

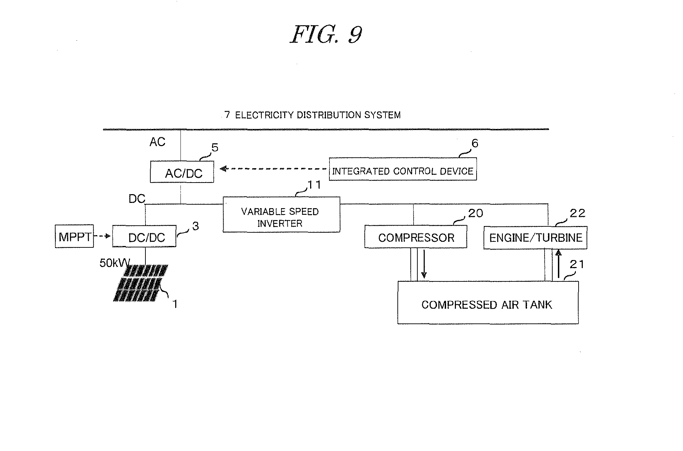

FIG. 9 shows a sixth embodiment. According to the sixth embodiment, the power storage device 2 is used to store energy utilizing compressed air.

According to the sixth embodiment, a motor-driven compressor 20 is coupled with the variable speed inverter 11 connected to the DC system, and at the time of charging, the compressor 20 is driven by power from the solar power generator 1 to accumulate compressed air in a tank 21. Conversely, at the time of discharging, the compressed air in the tank 21 is blown to an engine or a turbine 22 coupled to the tank 21 to drive the power generator coupled with the engine or the turbine 22.

According to the sixth embodiment, it is possible to charge/discharge the power generated by the solar power generator 1. Moreover, according to this embodiment, like the above-explained embodiments, charging/discharging of the power storage device can be independently controlled from the other units by the DC system in each of the units U1 to Un.

Also in the sixth embodiment, only some of the units U1 to Un can employ the structure of utilizing the energy by the compressed air and the other units U1 to Un can use the secondary battery as the power storage device 2.

According to the solar power generation system of at least one embodiment described above, the solar power generator and the power storage device are respectively provided with DC/DC converters which are coupled together, and each DC/DC converter is coupled with an AC/DC converter to configure a power generating/storing unit. By this configuration, the optimization by MPPT technology can be carried out for each unit corresponding to local problems, such as dusts, pollution, and shading. Therefore, it is not necessary to perform the complicated MPPT control on the whole array of the solar power generator. Furthermore, various kinds of secondary batteries with different charging/discharging characteristics, costs, etc., can be used.

While certain embodiments have been described, these embodiments have been presented by way of example only, and are not intended to limit the scope of the inventions. Indeed, the novel embodiment described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A solar power generation system comprising a solar power generator including a plurality of arrays, and a power storage device including a plurality of secondary batteries,
the solar power generator and the power storage device being respectively provided with DC/DC converters which are coupled together, and each DC/DC converter being coupled with an AC/DC converter to configure a power generating/storing unit,
a plurality of the units being prepared and coupled with an electricity distribution system through respective AC/DC converters,
the solar power generator of each unit being provided with a control unit that performs maximum power point tracking control so as to obtain a maximum output characteristic of the solar power generator,
the power storage device of each unit being provided with a control unit which detects a voltage at the battery side and which controls charging/discharging of the battery,
the solar power generation system further comprising an integrated control device which is connected to respective control units of each unit via a communication link and controls charging/discharging of each unit and an output of each unit,
the integrated control device calculating a target output value of a whole system based on an output value by the solar power generator of each unit, and transmitting the calculated target output value to the AC/DC converter of each unit, and
the AC/DC converter of each unit being provided with a control unit that controls the AC/DC converter to establish a system interconnection based on the target output value received from the integrated control device.

2. The solar power generation system according to claim 1, wherein the plurality of solar power generation systems each including the plurality of units are coupled to the electricity distribution system in a parallel connection manner.

3. The solar power generation system according to claim 1 or 2, wherein at least one of the units includes the power storage device that is a pumped-storage power generator.

4. The solar power generation system according to one of claims 1 to 3, wherein at least one of the units includes the power storage device that comprises a weight ascended/descended by a motor and a power generator which generates power by a positional energy of the weight.

5. The solar power generation system according to claim 4, wherein the weight is the secondary battery of the power storage device.

6. The solar power generation system according to one of claims 1 to 5, wherein at least one of the units includes the power storage device that comprises a compressed air tank which reserves air compressed by a compressor and a power generator which is driven by the air from the compressed air tank.
